# EUROPEAN PATENT SPECIFICATION

(11) **EP 2 870 335 B1**
(45) Date of publication and mention of the grant of the patent: **27.10.2021**
(21) Application number: 13813123.0
(22) Date of filing: 04.07.2013
(51) Int. Cl.: F01N 11/00, F01N 3/20, F02D 41/04

(54) **METHOD PERTAINING TO AN SCR SYSTEM AND AN SCR SYSTEM**
VERFAHREN FÜR EIN SCR-SYSTEM UND SCR-SYSTEM
PROCÉDÉ RELATIF À UN SYSTÈME SCR ET SYSTÈME SCR

(30) Priority: 05.07.2012 SE 1250770
(43) Date of publication of application: 13.05.2015
(73) Proprietor: Scania CV AB, 151 87 Södertälje (SE)
(72) Inventor: SIMON, Anders, 152 51 Södertälje (SE); HÄRDELIN, Mats, 126 49 Hägersten (SE)
(74) Representative: Scania CV AB
(86) International application number: PCT/SE2013/050873
(87) International publication number: WO 2014/007753

(56) References cited:
- EP-A1- 2 019 190
- EP-A1- 2 019 190
- EP-A1- 2 211 033
- EP-A1- 2 211 033
- EP-A1- 2 354 485
- WO-A1-2011/162700
- FR-A3- 2 959 277
- US-A1- 2007 113 544
- US-A1- 2007 163 244
- US-A1- 2009 107 119
- US-A1- 2009 107 119
- None

## Description

### TECHNICAL FIELD

The present invention relates to a method pertaining to an SCR system. The invention relates also to a computer program product comprising program code for a computer for implementing a method according to the invention. The invention relates also to an SCR system and a motor vehicle equipped with the SCR system.

### BACKGROUND

Vehicles today use, for example, urea as reductant in SCR (selective catalytic reduction) systems which comprise an SCR catalyst in which said reductant and NOₓ gas can react and be converted to nitrogen gas and water. Various types of reductants may be used in SCR systems. AdBlue is an example of a commonly used reductant.

One type of SCR system comprises a container which holds a reductant. The SCR system has also a pump arranged to draw said reductant from the container via a suction hose and supply it via a pressure hose to a dosing unit situated adjacent to an exhaust system of the vehicle, e.g. adjacent to an exhaust pipe of the exhaust system. The dosing unit is arranged to inject a necessary amount of reductant into an exhaust system upstream of the SCR catalyst according to operating routines which are stored in a control unit of the vehicle. To make it easier to regulate the pressure when there are small or no dosing amounts, the system comprises also a return hose which runs back to the container from a pressure side of the system.

An SCR system comprises a vaporizing portion where supplied reducing agent is vaporized so as to effectively be mixed before treatment by an SCR substrate. A problem arising when to heavy dosing of said reducing agent is that the vaporizing module is cooled down to temperatures where formation of crystals of said reducing agent may arise. This condition is non-desired because formation of crystals of the reducing agent may cause reduced performance of said SCR system and in the long run also causing the SCR system to be plugged. Crystal formation is in general associated with difficult cleaning or necessary purifying burning of said SCR system. It is thus desired to avoid accumulation of reducing agent as well as crystal formation of said reducing agent upstream said SCR substrate.

US 201039249 describes an SCR system of a motor vehicle where temperatures of the SCR catalyst are measured.

US 200040194451 describes a control system for combustion engines wherein fuel injection angles of the engine may be controlled on the basis of measured temperature of the catalyst.

EP 2211033 describes a method and an arrangement for controlling a combustion engine in a hybrid vehicle for the purpose of reducing content of NOₓ from an SCR system at low exhaust gas temperatures.

EP 2 019 190 A1 describes an improved exhaust-gas treatment system that uses a urea-SCR.

US 2009/107119 A1 describes a method and system of thermal management in an exhaust system.

### SUMMARY OF THE INVENTION

One object of the present invention is to propose a novel and advantageous method pertaining to an SCR system.

Another object of the invention is to propose a novel and advantageous SCR system and a novel and advantageous computer program pertaining to an SCR system.

A further object of the invention is to propose a method, an SCR system and a computer program for reducing risk of crystal formation of the reducing agent of the SCR system while NOₓ conversion may be maximized.

Yet another object of the invention is to propose an alternative method pertaining to an SCR system, an alternative SCR system and an alternative computer program pertaining to an SCR system.

Some of these objects are achieved by a method pertaining to an SCR system according to claim 1. Other objects are achieved by an SCR system according to claim 4. Advantageous embodiments are detected in the dependent claims.

According to an aspect of the invention there is provided a method pertaining to an SCR system wherein a reducing agent is provided an exhaust gas stream from an engine for purifying the exhaust gas with respect to among other things content of NOₓ and wherein the SCR system comprises a vaporization portion being arranged upstream a catalyst arrangement, comprising the steps of:
- continuously monitoring changes of a temperature of said vaporizing portion; and
- controlling mode of operation of said engine on the basis of said changes of the temperature of the vaporizing portion so as to operate said engine based on requirements regarding fuel economy as well as exhaust gas purification and at the same time avoid formation of crystals in said vaporizing portion.

Hereby is achieved a method pertaining to an SCR system, wherein a mode of operation of said engine is controlled on the basis of modelled/calculated/predicted/measured temperature of said vaporization portion of the catalyst arrangement.

Hereby is achieved a robust method wherein risk for formation of crystals upstream an SCR catalyst, e.g. in said vaporization portion, is reduced, minimized or eliminated. Hereby a high conversion performance regarding NOₓ may be maintained, which is advantageous not the least from an environmental perspective.

Hereby there is achieved a robust solution to the above stated problems where a risk for formation of urea stones is minimized while fuel consumption of the engine is optimized regarding available vaporization performance of the vaporization portion.

The step of controlling mode of operation comprises the step of:
- shifting mode of operation from a first mode of operation corresponding to a desired low fuel consumption and high content of NOₓ to a second mode of operation corresponding to a higher fuel consumption and a lower content of NOₓ of said exhaust gas, when said temperature of the vaporization portion is below a certain temperature threshold value. By reducing the content of NOₓ of the exhaust gas the need of reducing agent is reduced, which in turn lead to that said vaporization portion is not cooled by the amount reducing agent. In such a way the temperature of said vaporization portion is increased and formation of urea stones is thus avoided.

The step of controlling mode of operation comprises the step of:
- shifting mode of operation from a first mode of operation corresponding to a desired low fuel consumption and high content of NOₓ to a mode of operation where an increased temperature of said exhaust gas is achieved.

Said shift of mode of operation may be achieved by affecting e.g. EGR-content of the engine of the vehicle or by affecting fuel injection pressure of the engine of the vehicle. Hereby there is achieved an automated and thus environmental friendly method according to the invention.

The step of controlling mode of operation comprises the step of:
- shifting mode of operation from a second mode of operation corresponding to a high fuel consumption and a low content of NOₓ of the exhaust gas to a first mode of operation corresponding to a desired low fuel consumption and high content of NOₓ when said temperature of the vaporization portion reaches or exceeds a certain temperature threshold value. When said temperature of the vaporization portion reaches said temperature threshold value there is no longer any risk for formation of urea stones and the operation mode may be shifted back to the fuel saving mode of operation.

Said shift of mode of operation may be achieved by affecting e.g. EGR-content of the engine of the vehicle or by affecting fuel injection pressure of the engine of the vehicle. Hereby there is achieved an automated and thus environmental friendly method according to the invention.

The method may further comprise the step of:
- continuously modelling said temperature of the vaporizing portion on the basis of at least one of the parameters exhaust gas temperature, exhaust gas mass flow, dosed amount of reducing agent and temperature of said reducing agent. Hereby there is achieved an accurate and robust method according to the invention.

Said controlling of the mode of operation of said engine comprises to shift mode of operation between a suitable number of predetermined modes of operation. Hereby there is achieved a varied method according to the invention wherein a suitable mode of operation may be chosen paying regard to fuel economy as well as risk for formation of urea lumps upstream an SCR substrate of the catalyst arrangement.

The method may further comprise the step of:
- reducing dosing of reducing agent when said temperature of said vaporizing portion is below a predetermined threshold level. There is hereby achieved a reliable method according to an aspect of the invention.

There is provided a method pertaining to an SCR system, not according to the claimed invention, wherein a reducing agent is provided an exhaust gas stream from an engine for purifying the exhaust gas with respect to among other things content of NOₓ and wherein the SCR system comprises a vaporization portion being arranged upstream a catalyst arrangement, comprising the steps of:
- continuously determining temperature variations of said vaporizing portion; and
- controlling the temperature of said vaporization portion by selecting mode of operation of said engine such that shifting of mode of operation is performed when said temperature of the vaporization portion has been lowered to be within a predetermined temperature interval, wherein shifting from a mode of operation corresponding to a desired low fuel consumption and high content of NOₓ of the exhaust gas to a mode of operation corresponding to higher fuel consumption and lower content of NOₓ of the exhaust gas.

There is provided a method pertaining to an SCR system, not according to the invention, wherein a reducing agent is provided an exhaust gas stream from an engine for purifying the exhaust gas with respect to among other things content of NOₓ and wherein the SCR system comprises a vaporization portion being arranged upstream a catalyst arrangement, comprising the steps of:
- continuously monitoring changes of said temperature of the vaporization portion;
- continuously controlling mode of operation of said engine on the basis of said changes of the temperature of the vaporization portion for avoiding non-desired formation of crystals in said vaporization portion and operating said engine during desired optimal conditions as far as possible.

The method may be implemented in existing motor vehicles. Program code pertaining to an SCR system according to the invention may be installed in a control unit of the vehicle during the manufacture of the vehicle. A purchaser of the vehicle may thus have the possibility of selecting the function of the method as an option. Alternatively, program code for conducting the innovative method pertaining to an SCR system may be installed in a control unit of the vehicle on the occasion of upgrading at a service station, in which case the program code may be loaded into a memory in the control unit. Implementing the innovative method is therefore cost-effective. The invention thus represents a cost-effective solution to the problems indicated above.

Program code which comprises program code pertaining to an SCR system may be updated or replaced. Moreover, different parts of the program code pertaining to an SCR system may be replaced independently of one another. This modular configuration is advantageous from a maintenance perspective.

According to an aspect of the invention there is provided an SCR system wherein a reducing agent is provided to an exhaust gas stream from an engine for purifying said exhaust gas with respect to among other things content of NOₓ and wherein the SCR system comprises a vaporizing portion arranged upstream a catalyst arrangement, comprising:
- means arranged to continuously monitoring changes of said temperature of the vaporization portion;
- means arranged to control mode of operation of said engine on the basis of said changes of the temperature of the vaporizing portion so as to operate said engine based on requirements regarding fuel economy as well as exhaust gas purification and at the same time avoid formation of crystals in said vaporizing portion.

The SCR system further comprises:
- means arranged to shift mode of operation from a first mode of operation corresponding to a desired low fuel consumption and high content of NOₓ to a second mode of operation corresponding to a higher fuel consumption and lower content of NOₓ of the exhaust gas.

The SCR system may further comprise:
- means arranged for shifting mode of operation from a first mode of operation corresponding to a desired low fuel consumption and high content of NOₓ to a mode of operation where an increased temperature of said exhaust gas is achieved. The SCR system comprises:
- means arranged to shift mode of operation from a second mode of operation corresponding to a high fuel consumption and a low content of NOₓ of said exhaust gas to a first mode of operation corresponding to a desired low fuel consumption and high content of NOₓ.

The SCR system may further comprise:
- means arranged to continuously modelling said temperature of said vaporizing portion on the basis of at least one of the parameters exhaust gas temperature, exhaust gas mass flow, dosed amount reducing agent and temperature of said reducing agent.

The SCR system comprises:
- means arranged to control said mode of operation of said engine in such a way that a shift between a suitable number of predetermined modes of operation is achieved.

The SCR system may further comprise:
- means arranged to reduce dosing of reducing agent when said temperature of said vaporizing portion is below a predetermined threshold level.

According to an aspect of the invention there is provided a motor vehicle comprising said SCR system. The motor vehicle may be any of a truck, bus or passenger car.

According to an aspect of the invention there is provided a computer program pertaining to an SCR system wherein a reducing agent is provided to an exhaust gas stream from an engine for purifying said exhaust gas with respect to among other things content of NOₓ and wherein said SCR system comprises a vaporizing portion being arranged upstream a catalyst arrangement, wherein said computer program comprises a program code stored on a computer-readable medium for causing an electronic control unit or another computer connected to the electronic control unit to perform steps according any one of the claims 1-3.

According to an aspect of the invention there is provided a computer program pertaining to an SCR system wherein a reducing agent is provided to an exhaust gas stream from an engine for purifying said exhaust gas with respect to among other things content of NOₓ and wherein said SCR system comprises a vaporizing portion being arranged upstream a catalyst arrangement, wherein said computer program comprises a program code for causing an electronic control unit or another computer connected to the electronic control unit to perform steps according any one of the claims 1-3.

According to an aspect of the invention there is provided a computer program product comprising a program code stored on a computer readable medium for performing method steps according to any one of claims 1-3, when said computer program is run on an electronic control unit or another computer connected to the electric control unit.

Further objects, advantages and novel features of the present invention will become apparent to one skilled in the art from the following details, and also by putting the invention into practice. Whereas the invention is described below, it should be noted that it is not confined to the specific details described. One skilled in the art having access to the teachings herein will recognise further applications, modifications and incorporations within other fields, which are within the scope of the invention.

### BRIEF DESCRIPTION OF THE DRAWINGS

For fuller understanding of the present invention and its further objects and advantages, the detailed description set out below should be read in conjunction with the accompanying drawings, in which the same reference notations pertain to similar items in the various diagrams and
Figure 1 schematically illustrates a vehicle,
Figure 2a schematically illustrates a subsystem for the vehicle depicted in Figure 1, according to an embodiment of the invention;
Figure 2b schematically illustrates a subsystem for the vehicle depicted in Figure 1, according to an embodiment of the invention;
Fig. 3 schematically illustrates a diagram which elucidate the invention, according to an aspect thereof;
Fig. 4a is a schematic flow chart of a method according to an embodiment of the invention;
Fig. 4b is a more detailed schematic flow chart of a method according to an embodiment of the invention; and
Fig. 5 schematically illustrates a computer according to an embodiment of the invention.

### DETAILED DESCRIPTION OF THE DRAWINGS

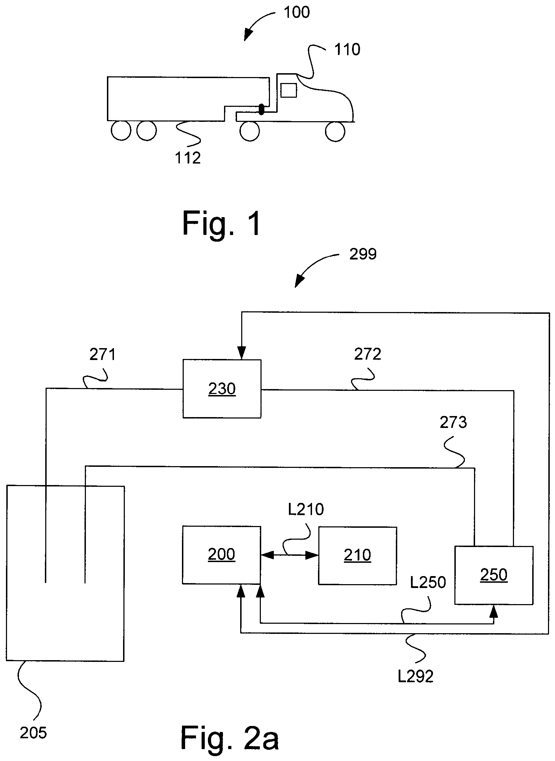

Figure 1 depicts a side view of a vehicle 100. The vehicle 100 here exemplified comprises a tractor unit 110 and a trailer 112. The vehicle may be a heavy vehicle, e.g. a truck or a bus. It may alternatively be a car.

It should be noted that the invention is suitable for application in any SCR system and is therefore not confined to SCR systems for motor vehicles. The innovative method and the innovative SCR system according to one aspect of the invention are well suited to other platforms which comprise an SCR system than motor vehicles, e.g. watercraft. The watercraft may be of any kind, e.g. motorboats, steamers, ferries or ships.

The innovative method and the innovative SCR system according to one aspect of the invention are for example also well suited to systems which comprise industrial engines and/or engine-powered industrial robots.

The innovative method and the innovative SCR system according to one aspect of the invention are also well suited to various kinds of power plants, e.g. an electric power plant provided with a diesel generator.

The innovative method and the innovative SCR system are well suited to any engine system which comprises an engine, e.g. on a locomotive or some other platform.

The innovative method and the innovative SCR system are well suited to any system which comprises a NOₓ generator.

The term "link" refers herein to a communication link which may be a physical connection such as an opto-electronic communication line, or a non-physical connection such as a wireless connection, e.g. a radio link or microwave link.

The term "line" refers herein to a passage for holding and conveying a fluid, e.g. a reducing agent in liquid form. The line may be a pipe of any size and be made of any suitable material, e.g. plastic, rubber or metal.

The term "reductant" or "reducing agent" refers herein to an agent used for reacting with certain emissions in an SCR system. These emissions may for example be NOx gas. The terms "reductant" and "reducing agent" are herein used synonymously. In one version, said reductant is so-called AdBlue. Other kinds of reductants may of course be used. AdBlue is herein cited as an example of a reductant, but one skilled in the art will appreciate that the innovative method and the innovative SCR system are feasible with other types of reductants, subject to necessary adaptations, in control algorithms in accordance with the innovative method.

Figure 2a depicts a subsystem 299 of the vehicle 100. The subsystem 299 is situated in the tractor unit 110 and may be part of an SCR system. It comprises in this example a container 205 arranged to hold a reductant. The container is adapted to holding a suitable amount of reductant and also to being replenishable as necessary. The container may be adapted to hold e.g. 75 or 50 litres of reductant.

A first line 271 is provided to lead the reductant to a pump 230 from the container 205. The pump 230 may be any suitable pump. It may be arranged to be driven by an electric motor (not depicted). The pump 230 may be adapted to drawing the reductant from the container 205 via the first line 271 and supplying it via a second line 272 to a dosing unit 250. The dosing unit 250 comprises an electrically controlled dosing valve by means of which a flow of reductant added to the exhaust system can be controlled. The pump 230 is adapted to pressurising the reductant in the second line 272. The dosing unit 250 is provided with a throttle unit, against which said pressure of the reductant may build up in the subsystem 299.

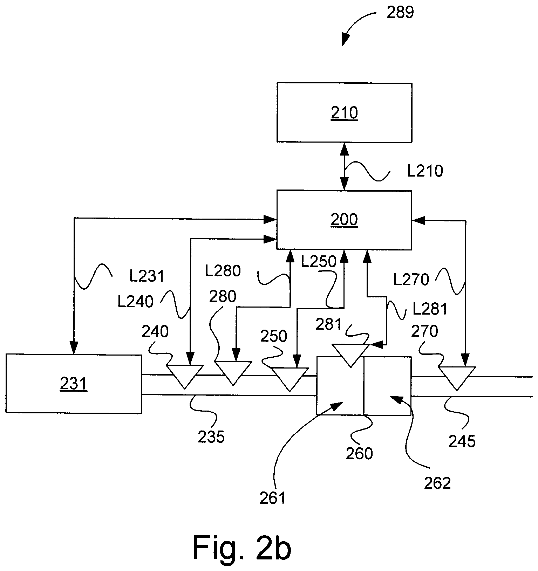

The dosing unit 250 is adapted to supplying said reductant to an exhaust system (see Fig. 2b) of the vehicle 100. More specifically, it is adapted to supplying a suitable amount of reductant in a controlled way to an exhaust system of the vehicle 100. In this version, an SCR catalyst (not depicted) is situated downstream of a location in the exhaust system where the supply of reductant takes place.

The dosing unit 250 may be situated adjacent to e.g. an exhaust duct which is provided to lead exhaust gas from a combustion engine 231 of the vehicle 100 to the SCR catalyst.

A third line 273 running between the dosing unit 250 and the container 205 is adapted to leading back to the container 205 a certain amount of the reductant fed to the dosing valve 250. This configuration results in advantageous cooling of the dosing unit 250. The dosing unit 250 is thus cooled by a flow of the reductant when it is pumped through it from the pump 230 to the container 205.

The first control unit 200 is arranged for communication with the pump 230 via a link L292. The first control unit 200 is arranged to control operation of said pump 230 so as to for example adjust flows of the reducing agent within the subsystem 299. The first control unit 200 is arranged to control an operation power of the pump 230 by controlling the electric engine.

The first control unit 200 is arranged for communication with a dosing unit 250 via en link L250. The first control unit 200 is arranged to control operation of said dosing unit 250 so as to for example control dosing of the reducing agent to the exhaust gas system of the vehicle 100. The first control unit 200 is arranged to control operation of the dosing unit 250 so as to for example adjust return flow of said reducing agent to the container 205.

A second control unit 210 is arranged for communication with the first control unit 200 via a link 210. This second control unit 210 may be detachably connected to the first control unit 200. It may be a control unit external to the vehicle. It may be adapted to conducting the innovative method steps according to the invention. It may be used to cross-load software to the first control unit, particularly software for applying the innovative method. It may alternatively be arranged for communication with the first control unit 200 via an internal network of the vehicle. It may be adapted to performing functions substantially similar to the first control unit 200, e.g. controlling mode of operation of said engine on the basis of changes of the temperature of the vaporizing portion so as to operate said engine based on requirements regarding fuel economy as well as exhaust gas purification and at the same time avoid formation of crystals in said vaporizing portion. The innovative method may be conducted by the first control unit 200 or the second control unit 210 or by both of them.

Fig. 2b illustrates a subsystem 289 of the vehicle shown i Figure 1 according to an embodiment of the invention. The subsystem 289 may constitute a part of the inventive SCR system.

An engine 231 is during operation causing an exhaust gas flow which is lead via a first passage 235 to an SCR catalyst arrangement 260. The SCR catalyst arrangement comprises a vaporizing module 261 and a catalyst portion 262. A second passage 245 is arranged to convey exhaust gas to a surrounding of the vehicle 100 from said SCR catalyst arrangement 260.

The first control unit 200 is arranged to shift mode of operation M of the engine 231. The first control unit 200 is arranged to shift between a suitable number of modes of the operation according to the inventive method which is depicted herein. The first control unit is arranged for communication with the engine 231 via a link L231.

Herein is depicted a vaporizing portion which comprises an area upstream said catalyst portion 262 where dosed reducing agent may be vaporized. Said vaporizing portion may comprise the vaporizing module 261 and a part of the first passage 235.

The first control unit 200 is arranged to control operation of the dosing unit 250 so as to dose reducing agent into the first passage 235. Said vaporizing module 261 is arranged to vaporize said dosed reducing agent so as to achieve a mixture of exhaust gas and reducing agent for treatment by means of said SCR portion 262. Said vaporizing module 261 may comprise a mixer (not shown) for mixing said vaporized reducing agent with an the exhaust gas. Said mixer may be arranged adjacent to said SCR catalyst 262, i.e. relatively far down downstream said vaporizing module 261. Said vaporizing module 261 is formed in any suitable way. Said vaporizing module 261 is configured to achieve a most effective vaporizing of provided reducing agent as possible. Herein said vaporizing module is providing large surfaces where vaporizing of provided reducing agent may be performed in an effective way. Said vaporizing module 261 may consist of a metal or a metal alloy.

A first NOₓ sensor 240 is arranged upstream said SCR catalyst arrangement 260 at said first passage 235. Said first NOₓ sensor 240 is arranged for communication with the first control unit 200 via a link L240. The first NOₓ sensor 240 is arranged to continuously determine a prevailing content of NOₓ in the first passage 235. The first NOₓ sensor 240 is arranged to continuously send signals comprising information about a prevailing content of NOₓ to the first control unit 200 via the link L240.

A second NOₓ sensor 270 is arranged downstream said SCR catalyst arrangement 260 at said second passage 245. Said second NOₓ sensor 270 is arranged for communication with the first control unit 200 via a link L270. The second NOₓ sensor 270 is arranged to continuously determine a prevailing content of NOₓ in the second passage 245. The first NOₓ sensor 270 is arranged to continuously send signals comprising information about a prevailing content of NOₓ to the first control unit 200 via the link L240.

Said first NOₓ sensor 240 and said second NOₓ sensor 270 may be used to provide information about prevailing content of NOₓ in the first passage 235 and the second passage 245, respectively. Hereby said first control 200 unit may be arranged to dose reducing agent into the first passage 235 in a suitable way on the basis of information thereof.

According to one embodiment the first control unit 200 may be arranged to determine a prevailing content of NOₓ in the first passage 235 and the second passage 245, respectively, by means of a in a memory stored calculating module. Hereby is the first control unit 200 arranged to dose reducing agent into the first passage 235 in a suitable way on the basis of information about said calculated prevailing content of NOₓ in the said first passage 235 and the second passage 245, respectively.

A temperature sensor 280 is arranged upstream said SCR catalyst arrangement 260 at said first passage 235. Said temperature sensor 280 is arranged for communication with the first control unit 200 via a link L280. The temperature sensor 280 is arranged to continuously establish a prevailing temperature Tmeas of the exhaust gas in the first passage 235. The temperature 280 is arranged to continuously send signals comprising information about a prevailing temperature Tmeas of the exhaust gas to the first control unit 200 via the link L280.

According to one embodiment the first control unit 200 is arranged to by means of a therein stored calculating model determine a prevailing temperature Tmeas of said exhaust gas in the first passage 235. Said prevailing temperature Tmeas of the exhaust gas in the first passage 235 may be determined on the basis of for example a determined exhaust gas mass flow and an amount of injected fuel to the engine 230.

A sensor (not shown) for measuring a prevailing exhaust gas mass flow MF may be arranged in the first passage 235. Said exhaust gas mass flow sensor is arranged to continuously determine a prevailing exhaust gas mass flow MF i the first passage 235 and send signals comprising information thereof to the first control unit 200 via a suitable link (not shown).

According to one embodiment the first control unit 200 is arranged to by means of a therein stored calculating model determine a prevailing exhaust gas mass flow MF in the first passage 235. Said prevailing exhaust gas mass flow MF in the first passage 235 may be determined on the basis of for example a determined mode of operation of the engine 230.

A sensor (not shown) for measuring a prevailing temperature of said reducing agent may be arranged at a suitable location of the SCR system. Said temperature sensor is arranged to continuously determine a prevailing temperature of said reducing agent and send signals comprising information thereof to the first control unit 200 via a suitable link (not shown).

According to an embodiment there is provided a temperature sensor 281. Said temperature sensor 281 is arranged to continuously or intermittently measure a temperature of said vaporizing portion. Said temperature sensor 281 may be arranged at said SCR catalyst arrangement 260. Said temperature sensor 281 may be arranged at said vaporizing module 261. Said temperature sensor 281 may be arranged at the first passage 235. Said temperature sensor 281 is arranged for communication with the first control unit 200 via a link L281. The temperature sensor 281 is arranged to continuously determine a prevailing temperature of a vaporizing surface of the SCR system. The temperature sensor 281 is arranged to continuously send signals comprising information about the prevailing temperature of said vaporizing portion to the first control unit 200 via the link L281.

It should be noted that the inventive method may be performed in a way where a a temperature measured by said temperature sensor 281 is used to control said engine 231. Hereby said temperature measured by said temperature sensor 281 is used instead of or as a complement to control said engine 231 on the basis of a modelled temperature of said vaporizing portion. The first control unit 200 is hereby arranged to in any suitable way use said measured temperature according to an aspect of the inventive method.

The first control unit 200 is arranged to by means of a stored model continuously predict a prevailing temperature Tmod of the vaporizing module 261. The first control unit 200 is arranged to by means of a stored model continuously predict a prevailing temperature Tmod of said vaporizing portion. By using the predicted temperature of the actual surface against which the reducing agent is vaporized there is achieved an SCR system which is more stable than in prior art and which more correctly may determine if a risk for formation of urea stones is present. The first control unit 200 is arranged to by means of said module calculate a prevailing temperature Tmod of the vaporizing module 261 on the basis of said determined temperature of the exhaust gas Tmeas in the first passage 235. The first control unit 200 is arranged to by means of said module calculate a prevailing temperature Tmod of the vaporizing module 261 on the basis of a dosed amount reducing agent into the first passage 235. According to an example the first control unit 200 is arranged to by means of said model calculate a prevailing temperature Tmod of the vaporizing module 261 on the basis of a dosed amount reducing agent into the first passage 235 and said determined temperature Tmeas of the exhaust gas in the first passage 235. According to an example the first control unit 200 is arranged to by means of said model calculate a prevailing temperature Tmod of the vaporizing module 261 on the basis of a dosed amount reducing agent into the first passage 235, said determined temperature Tmeas of the exhaust gas in the first passage 235 and a prevailing exhaust gas mass flow MF in the first passage 235.

According to an example the first control unit 200 is arranged to by means of said model calculate a prevailing temperature Tmod of the vaporizing module 261 on the basis of a dosed amount reducing agent in the first passage 235, wherein said determined temperature of the exhaust gas in the first passage 235 and a prevailing temperature of said dosed reducing agent. Hereby the subsystem 299 may be arranged with a temperature sensor (not shown) for measuring a prevailing temperature of the reducing agent.

The first control unit 200 is arranged to continuously or intermittently determine a prevailing temperature of said vaporizing portion on the basis of said signals from said temperature sensor 281.

The first control unit 200 is according to an example arranged to control operation of said engine 231 to increase or lower a temperature of said exhaust gas from said engine 231. Hereby the first control unit 200 may be arranged to first increase and thereafter lower said temperature of said exhaust gas from said engine 231. Hereby the first control unit 200 may be arranged to first lower and thereafter increasing said temperature of said exhaust gas from said engine 231. Said temperature may hereby be increased respective lowered continuously. Said temperature may hereby be increased respective lowered in a number of suitable steps. Said temperature may hereby be controlled, continuously or intermittently, to an eventually varying, preferred temperature. Hereby, when applicable, an increase of a temperature of said exhaust gas may be achieved so as to in an effective way increase said temperature to allow effective vaporizing of dosed reducing agent at said vaporizing portion.

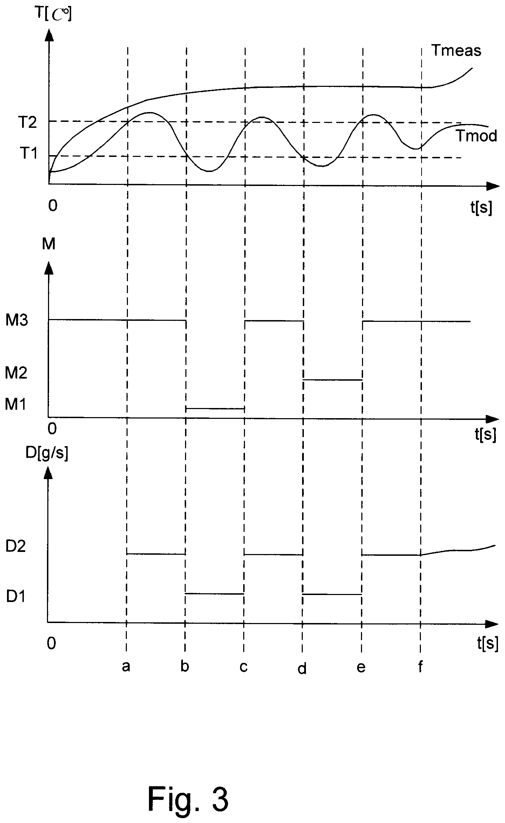

Fig. 3 schematically illustrates a diagram elucidating the invention according to an aspect thereof. In the diagram there is shown three graphs which are associated with different operation parameters during a certain time period.

In a first graph there is illustrated a measured exhaust gas temperature Tmeas and a modelled temperature Tmod at the vaporizing portion 261 as a function of time t.

In a second graph there is illustrated an operation mode M of the engine 230 as a function of time t.

In a third graph there is illustrated dosed amount reducing agent D as a function of time t.

Further there is provided a number of time points a-f. During a time interval which is defined by the time point zero (0) and f is according to this example a prevailing load of said engine 231 substantially constant (static).

At the time point a the dosing of the reducing agent D is started at the SCR system. The reducing agent is hereby dosed at a level D2. Said level D2 may be a suitable level. Hereby the modelled temperature Tmod of the vaporizing portion 261 is beginning to sink. At time point b said temperature Tmod is lower than a predetermined value T1 which triggers the first control unit 200 to shift mode of operation M of the engine from a current mode of operation M3 to a mode of operation M1. Said predetermined value T1 may be a suitable value, for example 200 degrees Celsius. Said predetermined value T1 may be determined on the basis of information of characteristics of said reducing agent. Said predetermined value T1 may correspond to a temperature under which increased risk for crystal formation of dosed reducing agent is present.

The mode of operation M3 may be denoted a first mode of operation which corresponds to a desired low fuel consumption and high content of NOₓ of the exhaust gas of the engine. The mode of operation M1 may be denoted a second mode of operation which corresponds to a higher fuel consumption compared to M3 and a lower content of NOₓ of the exhaust gas than at M3.

Hereby the modelled temperature Tmod of the vaporizing portion 261 is starting increase and a demand of providing reducing agent is decreased whereby dosing of said reducing agent is lowered from a level D2 to a lower level D1. Said level D1 may be a suitable level.

At the time point c the modelled temperature Tmod reaches a predetermined temperature T2 which triggers the first control unit 200 to shift mode of operation M of the engine 230 from the mode of operation M1 to the mode of operation M3. Hereby may provision of reducing agent may be increased from the level D1 to the level D2 whereby the modelled temperature Tmod of the vaporizing module 261 once again sinks. Said predetermined value T2 may be a suitable value for example 200 degrees Celsius. Said predetermined value T2 may be determined on the basis of information of characteristics of the reducing agent.

At the time point d the modelled temperature Tmod of the vaporizing portion 261 has sunk under the predetermined temperature T1, whereby the mode of operation M1 is shifted to a mode of operation M2, which mode of operation M2 may be denoted a third mode of operation, which corresponds to a higher fuel consumption compared to M3 and a lower content of NOₓ of the exhaust gas compared to M3. Hereby the dosing of the reducing agent is lowered from the level D2 to for example the level D1 or any other suitable level which is lower than the level D2.

According to an embodiment said mode of operation may be lowered in a suitable number of steps each of which is representing a unique suitable mode of operation. Said mode of operations may be predetermined. Between each lowering an evaluation regarding fuel economy and risk for crystal formation of said reducing agent may be performed of the first control unit 200. Hereby a shifting of mode of operation may be performed in a more optimal way, paying regard to said fuel economy and risk of crystal formation of said reducing agent.

At the time point e the modelled temperature Tmod reaches the predetermined temperature level T2 and the first control unit 200 shifts from the mode of operation M2 to the mode of operation M3.

At the time point f a load of the engine is increased, which results in an increased temperature Tmeas of the exhaust gas, hereby the modelled temperature Tmod of the vaporizing portion will not sink under the first temperature level T1 and the vehicle 100 may continuously be propelled according to the mode of operation M3.

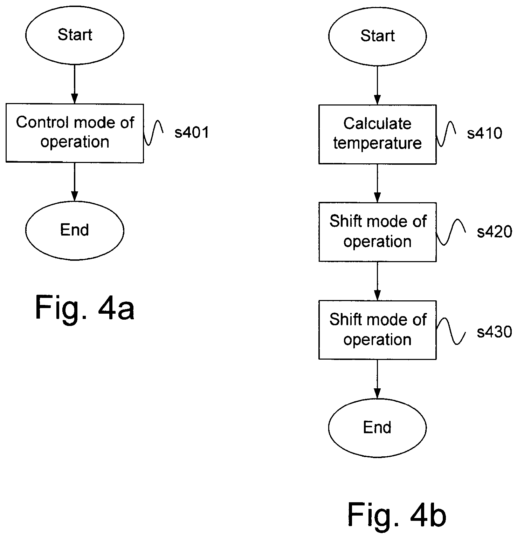

Figure 4a schematically illustrates a flow chart of a method pertaining to an SCR system wherein a reducing agent is provided to an exhaust gas stream from an engine for purifying the exhaust gas with respect to among other things content of NOₓ and wherein the SCR system comprises a vaporization portion being arranged upstream a catalyst arrangement, according to an embodiment of the invention. The method comprises a first method step s401. The step s401 comprises the steps of:
- continuously monitoring changes of a temperature of said vaporizing portion;
- controlling mode of operation of said engine on the basis of said changes of the temperature of the vaporizing portion so as to operate said engine based on requirements regarding fuel economy as well as exhaust gas purification and at the same time avoid formation of crystals in said vaporizing portion. After the step s401 the method ends.

Figure 4b schematically illustrates a flow chart of a method pertaining to an SCR system wherein a reducing agent is provided to an exhaust gas stream from an engine for purifying the exhaust gas with respect to among other things content of NOₓ and wherein the SCR system comprises a vaporization portion being arranged upstream a SCR substrate of an SCR catalyst arrangement 260, according to the invention.

The method comprises a first method step s410. The method step s410 comprises the step of continuously calculating a temperature Tmod of the vaporizing module 261 of the SCR system. The temperature Tmod of the vaporizing module 261 may be calculated on the basis of information about a temperature Tmeas of the exhaust gas from the engine 230 of the vehicle, prevailing exhaust gas mass flow MF and dosed amount reducing agent at the first passage 235. After the method step s410 a subsequent method step s420 is performed.

The method step s420 comprises the step of, when said calculated temperature Tmod of the vaporizing portion is lower than a predetermined temperature T1, shifting mode of operation from a first mode of operation M3 corresponding a desired low fuel consumption and high content of NOₓ to a second mode of operation M1 corresponding to a higher fuel consumption and lower content of NOₓ of the exhaust gas. After the method step s420 a subsequent method step s430 is performed.

The method step s430 comprises the step of, when said calculated temperature Tmod of the vaporizing portion exceeds a predetermined temperature T2, shifting mode of operation from a second mode of operation M1 corresponding a high fuel consumption and a low content of NOₓ of the exhaust gas to a first mode of operation M3 corresponding to a desired low fuel consumption and high content of NOₓ. After the method step s430 the method is ended.

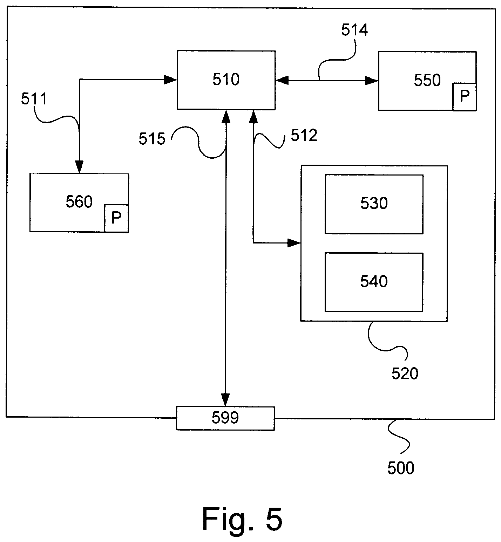

Figure 5 is a diagram of one version of a device 500. The control units 200 and 210 described with reference to Figure 2 may in one version comprise the device 500. The device 500 comprises a non-volatile memory 520, a data processing unit 510 and a read/write memory 550. The non-volatile memory 520 has a first memory element 530 in which a computer program, e.g. an operating system, is stored for controlling the function of the device 500. The device 500 further comprises a bus controller, a serial communication port, I/O means, an A/D converter, a time and date input and transfer unit, an event counter and an interruption controller (not depicted). The non-volatile memory 520 has also a second memory element 540.

There is provided a computer program P comprising routines for continuously monitoring changes of said temperature of said vaporizing portion.

The computer program P comprises routines for controlling mode of operation of said engine 230 on the basis of said changes of the temperature Tmod of the vaporizing portion so as to operate said engine based on requirements regarding fuel economy as well as exhaust gas purification and at the same time avoid formation of crystals in said vaporizing portion.

The computer program P comprises routines for shifting mode of operation from a first mode of operation corresponding to a desired low fuel consumption and high content of NOₓ to a second mode of operation corresponding to a higher fuel consumption and a lower content of NOₓ of said exhaust gas.

The computer program P comprises routines for shifting mode of operation from a second mode of operation corresponding to a high fuel consumption and a low content of NOₓ of the exhaust gas to a first mode of operation corresponding to the desired low fuel consumption and high content of NOₓ.

The computer program P comprises routines for continuously modelling said temperature of the vaporizing portion 361 on the basis of at least one of the parameters exhaust gas temperature Tmeas, exhaust gas mass flow MF, dosed amount of reducing agent D and temperature of said reducing agent.

The computer program P comprises routines for shifting mode of operation between a suitable number of predetermined modes of operation.

The computer program P comprises routines for reducing dosing of reducing agent when said temperature of said vaporizing portion is below a predetermined threshold level.

The computer program P may be stored in an executable form or in compressed form in a memory 560 and/or in a read/write memory 550.

Where the data processing unit 510 is described as performing a certain function, it means that the data processing unit 510 conducts a certain part of the program stored in the memory 560, or a certain part of the program stored in the read/write memory 550.

The data processing device 510 can communicate with a data port 599 via a data bus 515. The non-volatile memory 520 is intended for communication with the data processing unit 510 via a data bus 512. The separate memory 560 is intended to communicate with the data processing unit 510 via a data bus 511. The read/write memory 550 is adapted to communicating with the data processing unit 510 via a data bus 514. The data port 599 may for example have the links L210, L230, L240, L250, L270, L280, L281 and L292 connected to it (see Figure 2).

When data are received on the data port 599, they are temporarily stored in the second memory element 540. When input data have been stored temporarily, the data processing unit 510 is prepared to effect code execution as described above. According to one embodiment signals received at the data port 599 comprises information about a prevailing mass flow of the exhaust gas in the first passage 235. According to one embodiment signals received on the data port 599 comprises information about a prevailing temperature Tmeas of the exhaust gas in the first passage 235. According to one embodiment signals received at data port 599 comprises information about content of NOₓ of the exhaust gas in the first passage 235 and the second passage 245. The signals received on the data port 599 may be used by the device 500 for continuously monitoring changes of the temperature Tmod of said vaporizing portion 261 and controlling mode of operation of said engine 231 on the basis of said changes of the temperature Tmod of the vaporizing portion so as to operate said engine 230 based on requirements regarding fuel economy as well as exhaust gas purification and at the same time avoid formation of crystals in said vaporizing portion 261.

Parts of the methods herein described may be conducted by the device 500 by means of the data processing unit 510 which runs the program stored in the memory 560 or the read/write memory 550. When the device 500 runs the program, methods herein described are executed.

The foregoing description of the preferred embodiments of the present invention is provided for illustrative and descriptive purposes. It is not intended to be exhaustive nor to restrict the invention to the variants described. Many modifications and variations, according to the appended claims, will obviously suggest themselves to one skilled in the art. The embodiments have been chosen and described in order best to explain the principles of the invention and their practical applications and hence make it possible for one skilled in the art to understand the invention for different embodiments and with the various modifications appropriate to the intended use.

## Claims

1. A method pertaining to an SCR system wherein a reducing agent is provided to an exhaust gas stream from an engine (231) for purifying the exhaust gas with respect to among other things content of NOₓ and wherein the SCR system comprises a vaporization module (261) being arranged upstream a catalyst arrangement (260; 262), wherein the vaporization module (261) is arranged to vaporize said reducing agent so as to achieve a mixture of exhaust gas and reducing agent, the method comprising the step of:
- (s410) continuously monitoring changes of a prevailing temperature (Tmod) of said vaporizing module;
**characterized by** the step of:
- controlling (s420, s430) mode of operation of said engine (231) on the basis of said changes of the prevailing temperature (Tmod) of the vaporizing module,
wherein said step of controlling the mode of operation comprises the steps of
- shifting (s420) mode of operation from a first mode of operation (M3) corresponding to a desired low fuel consumption and high content of NOₓ to a second mode of operation (M1; M2) corresponding to a higher fuel consumption and a lower content of NOₓ of said exhaust gas when said prevailing temperature (Tmod) of said vaporizing module (261) is lower than a first pre-determined temperature value (T1); and
- shifting (s430) mode of operation from a second mode of operation (M1; M2) corresponding to a high fuel consumption and a low content of NOₓ of the exhaust gas to a first mode of operation (M3) corresponding to the desired low fuel consumption and high content of NOₓ when said prevailing temperature (Tmod) of said vaporizing module (261) reaches a second pre-determined temperature value (T2).

2. A method according to claim 1 further comprising the step of:
- continuously (s410) modelling said prevailing temperature (Tmod) of the vaporizing module (261) on the basis of at least one of the parameters exhaust gas temperature (Tmeas), exhaust gas mass flow (MF), dosed amount of reducing agent (D) and temperature of said reducing agent.

3. A method according to any of the foregoing claims further comprising the step of:
- reducing dosing of reducing agent when said prevailing temperature (Tmod) of said vaporizing module is below a predetermined threshold level (T1).

4. An SCR system wherein a reducing agent is provided to an exhaust gas stream from an engine (231) for purifying said exhaust gas with respect to among other things content of NOₓ and wherein the SCR system comprises a vaporizing module (261) arranged upstream a catalyst arrangement (260; 262), wherein the vaporization module (261) is arranged to vaporize said reducing agent so as to achieve a mixture of exhaust gas and reducing agent, the SCR system comprising:
- means (240; 200; 210; 500) arranged to continuously monitor changes of a prevailing temperature (Tmod) of the vaporization module;
**characterized by**
- means (240; 200; 210; 500) arranged to control mode of operation of said engine (231) on the basis of said changes of the prevailing temperature (Tmod) of the vaporizing module;
- means (200; 210; 500) arranged to shift mode of operation from a first mode of operation (M3) corresponding to a desired low fuel consumption and high content of NOₓ to a second mode of operation (M1; M2) corresponding to a higher fuel consumption and lower content of NOₓ of the exhaust gas when said prevailing temperature (Tmod) of said vaporizing module (261) is lower than a first pre-determined temperature value (T1); and
- means (200; 210; 500) arranged to shift mode of operation from a second mode of operation (M1; M2) corresponding to a high fuel consumption and a low content of NOₓ of said exhaust gas to a first mode of operation (M1) corresponding to a desired low fuel consumption and high content of NOₓ when said prevailing temperature (Tmod) of said vaporizing module (261) reaches a second pre-determined temperature value (T2).

5. An SCR system according to claim 4 further comprising:
- means (200; 210; 500) arranged to continuously model said prevailing temperature (Tmod) of said vaporizing module on the basis of at least one of the parameters exhaust gas temperature (Tmeas), exhaust gas mass flow, dosed amount reducing agent and temperature of said reducing agent.

6. An SCR system according to any of the claims 4-5 further comprising:
- means (250; 200; 210; 500) arranged to reduce dosing of reducing agent when said prevailing temperature (Tmod) of said vaporizing module is below a predetermined threshold level (T1).

7. Motor vehicle (100; 110) comprising an SCR system according to any of the claims 4-6.

8. Motor vehicle (100; 110) according to claim 7, wherein said motor vehicle is any of a truck, bus or car.

9. A computer program (P) pertaining to an SCR system wherein a reducing agent is provided to an exhaust gas stream from an engine (230) for purifying said exhaust gas with respect to among other things content of NOₓ and wherein said SCR system comprises a vaporizing module (261) being arranged upstream a catalyst arrangement (260), wherein the vaporization module (261) is arranged to vaporize said reducing agent so as to achieve a mixture of exhaust gas and reducing agent, wherein said computer program (P) comprises a program code for causing an electronic control unit (200; 500) or another computer (210; 500) connected to the electronic control unit (200; 500) to perform steps according any one of the claims 1-3.

10. A computer program product comprising a program code stored on a computer readable medium for performing method steps according to any one of claims 1-3, when said computer program is run on an electronic control unit (200; 500) or another computer (210; 500) connected to the electric control unit (200; 500).

## Patentansprüche

1. Verfahren für ein SCR-System, bei dem ein Reduktionsmittel einem Abgasstrom aus einem Motor (231) zugeführt wird, um das Abgas hinsichtlich unter anderem eines Gehalts an NOₓ zu reinigen, und bei dem das SCR-System ein Verdampfungsmodul (261) aufweist, das stromaufwärts einer Katalysatoranordnung (260; 262) angeordnet ist, wobei das Verdampfungsmodul (261) dazu angeordnet ist, das Reduktionsmittel zu verdampfen, um eine Mischung aus Abgas und Reduktionsmittel zu erhalten, wobei das Verfahren die Schritte umfasst:
- (s410) fortlaufendes Überwachen von Änderungen einer vorherrschenden Temperatur (Tmod) des Verdampfungsmoduls,
**gekennzeichnet durch** den Schritt des:
- Steuerns (s420, s430) eines Betriebsmodus des Motors (231) auf der Basis der Änderungen der vorherrschenden Temperatur (Tmod) des Verdampfungsmoduls, wobei der Schritt des Steuerns des Betriebsmodus die Schritte umfasst
- Verändern (s420) des Betriebsmodus von einem ersten Betriebsmodus (M3), der einem gewünschten niedrigen Kraftstoffverbrauch und einem hohen Gehalt an NOₓ entspricht, in einen zweiten Betriebsmodus (M1; M2), der einem höheren Kraftstoffverbrauch und einem niedrigeren Gehalt an NOₓ des Abgases entspricht, wenn die vorherrschende Temperatur (Tmod) des Verdampfungsmoduls (261) niedriger ist als ein erster vorbestimmter Temperaturwert (T1), und
- Ändern (s430) des Betriebsmodus von einem zweiten Betriebsmodus (M1; M2), der einem hohen Kraftstoffverbrauch und einem niedrigen Gehalt an NOₓ des Abgases entspricht, in einen ersten Betriebsmodus (M3), der dem gewünschten niedrigen Kraftstoffverbrauch und einem hohen Gehalt an NOₓ entspricht, wenn die vorherrschende Temperatur (Tmod) des Verdampfungsmoduls (261) einen zweiten vorbestimmten Temperaturwert (T2) erreicht.

2. Verfahren nach Anspruch 1, ferner umfassend den Schritt des:
- fortlaufenden (s410) Modellierens der vorherrschenden Temperatur (Tmod) des Verdampfungsmoduls (261) auf der Basis wenigstens eines der Parameter Abgastemperatur (Tmeas), Abgasmassenstrom (MF), dosierte Reduktionsmittelmenge (D) und Temperatur des Reduktionsmittels.

3. Verfahren nach einem der vorhergehenden Ansprüche, ferner umfassend den Schritt des:
- Verringerns einer Reduktionsmitteldosierung, wenn die vorherrschende Temperatur (Tmod) des Verdampfungsmoduls sich unter einem vorbestimmten Schwellenwert (T1) befindet.

4. SCR-System, bei dem ein Reduktionsmittel einem Abgasstrom aus einem Motor (231) zugeführt wird, um das Abgas hinsichtlich unter anderem eines Gehalts an NOₓ zu reinigen, und bei dem das SCR-System ein Verdampfungsmodul (261) aufweist, das stromaufwärts einer Katalysatoranordnung (260; 262) angeordnet ist, wobei das Verdampfungsmodul (261) dazu angeordnet ist, das Reduktionsmittel zu verdampfen, um eine Mischung aus Abgas und Reduktionsmittel zu erhalten, wobei das SCR-System aufweist:
- Mittel (240; 200; 210; 500), die dazu angeordnet sind, fortlaufend Änderungen einer vorherrschenden Temperatur (Tmod) des Verdampfungsmoduls zu überwachen,
**gekennzeichnet durch**
- Mittel (240; 200; 210; 500), die dazu angeordnet sind, einen Betriebsmodus des Motors (231) auf der Basis der Änderungen der vorherrschenden Temperatur (Tmod) des Verdampfungsmoduls zu steuern,
- Mittel (200; 210; 500), die dazu angeordnet sind, einen Betriebsmodus von einem ersten Betriebsmodus (M3), der einem gewünschten niedrigen Kraftstoffverbrauch und einem hohen Gehalt an NOₓ entspricht, in einen zweiten Betriebsmodus (M1; M2) zu ändern, der einem höheren Kraftstoffverbrauch und einem niedrigeren Gehalt an NOₓ des Abgases entspricht, wenn die vorherrschende Temperatur (Tmod) des Verdampfungsmoduls (261) niedriger ist als ein erster vorbestimmter Temperaturwert (T1), und
- Mittel (200; 210; 500), die dazu angeordnet sind, den Betriebsmodus von einem zweiten Betriebsmodus (M1; M2), der einem hohen Kraftstoffverbrauch und einem niedrigen Gehalt an NOₓ des Abgases entspricht, in einen ersten Betriebsmodus (M1) zu ändern, der einem gewünschten niedrigen Kraftstoffverbrauch und einem hohen Gehalt an NOₓ entspricht, wenn die vorherrschende Temperatur (Tmod) des Verdampfungsmoduls (261) einen zweiten vorbestimmten Temperaturwert (T2) erreicht.

5. SCR-System nach Anspruch 4, ferner umfassend:
- Mittel (200; 210; 500), die dazu angeordnet sind, fortlaufend die vorherrschende Temperatur (Tmod) des Verdampfungsmoduls auf der Basis wenigstens eines der Parameter Abgastemperatur (Tmeas), Abgasmassenstrom, dosierte Reduktionsmittelmenge und Temperatur des Reduktionsmittels zu modellieren.

6. SCR-System nach einem der Ansprüche 4 bis 5, ferner umfassend:
- Mittel (250; 200; 210; 500), die dazu angeordnet sind, eine Reduktionsmitteldosierung zu verringern, wenn die vorherrschende Temperatur (Tmod) des Verdampfungsmoduls sich unter einem vorbestimmten Schwellenwert (T1) befindet.

7. Kraftfahrzeug (100; 110) mit einem SCR-System nach einem der Ansprüche 4 bis 6.

8. Kraftfahrzeug (100; 110) nach Anspruch 7, wobei das Kraftfahrzeug ein jegliches aus einem Lastwagen, Omnibus oder PKW ist.

9. Computerprogramm (P) für ein SCR-System, bei dem ein Reduktionsmittel einem Abgasstrom aus einem Motor (230) zugeführt wird, um das Abgas hinsichtlich unter anderem eines Gehalts an NOₓ zu reinigen, und bei dem das SCR-System ein Verdampfungsmodul (261) umfasst, das stromaufwärts einer Katalysatoranordnung (260) angeordnet ist, wobei das Verdampfungsmodul (261) dazu angeordnet ist, das Reduktionsmittel zu verdampfen, um eine Mischung aus Abgas und Reduktionsmittel zu erhalten, wobei das Computerprogramm (P) einen Programmcode enthält, um eine elektronische Steuereinheit (200; 500) oder einen anderen mit der elektronischen Steuereinheit (200; 500) verbundenen Computer (210; 500) dazu zu veranlassen, Schritte nach einem der Ansprüche 1 bis 3 auszuführen.

10. Computerprogrammprodukt mit einem auf einem computerlesbaren Medium gespeicherten Programmcode zum Durchführen von Verfahrensschritten nach einem der Ansprüche 1 bis 3, wenn das Computerprogramm auf einer elektronischen Steuereinheit (200; 500) oder einem anderen mit der elektronischen Steuereinheit (200; 500) verbundenen Computer (210; 500) ausgeführt wird.

## Revendications

1. Procédé se rapportant à un système SCR dans lequel un agent réducteur est fourni à un flux de gaz d'échappement provenant d'un moteur (231) pour purifier les gaz d'échappement par rapport à un contenu de NOx entre autres et dans lequel le système SCR comprend un module de vaporisation (261) disposé en amont d'un agencement de catalyseur (260 ; 262), dans lequel le module de vaporisation (261) est agencé pour vaporiser ledit agent réducteur de manière à obtenir un mélange de gaz d'échappement et d'agent réducteur, le procédé comprenant l'étape de :
- (s410) surveillance en continu les changements d'une température dominante (Tmod) dudit module de vaporisation ;
**caractérisé par** l'étape consistant en :
- la commande (s420, s430) du mode de fonctionnement dudit moteur (231) sur la base desdits changements de la température dominante (Tmod) du module de vaporisation, dans lequel ladite étape de commande du mode de fonctionnement comprend les étapes consistant à
- passer (s420) d'un mode de fonctionnement d'un premier mode de fonctionnement (M3) correspondant à une faible consommation de carburant souhaitée et une teneur élevée en NOx à un deuxième mode de fonctionnement (M1 ; M2) correspondant à une consommation de carburant supérieure et une teneur inférieure en NOx dudit gaz d'échappement lorsque ladite température dominante (Tmod) dudit module de vaporisation (261) est inférieure à une première valeur de température prédéterminée (T1) ; et
- passer (s430) d'un mode de fonctionnement d'un deuxième mode de fonctionnement (M1 ; M2) correspondant à une consommation de carburant élevée et une teneur faible en NOx du gaz d'échappement à un premier mode de fonctionnement (M3) correspondant à une consommation de carburant faible et une teneur élevée en NOx lorsque ladite température dominante (Tmod) dudit module de vaporisation (261) atteint une deuxième valeur de température prédéterminée (T2).

2. Procédé selon la revendication 1, comprenant en outre l'étape de :
- modélisation en continu (s410) de ladite température dominante (Tmod) du module de vaporisation (261) sur la base d'au moins un des paramètres : température des gaz d'échappement (Tmeas), débit massique des gaz d'échappement (MF), quantité dosée d'agent réducteur (D) et température dudit agent réducteur.

3. Procédé selon l'une quelconque des revendications précédentes comprenant en outre l'étape consistant à :
- réduire le dosage de l'agent réducteur lorsque ladite température dominante (Tmod) dudit module de vaporisation est inférieure à un niveau de seuil prédéterminé (T1).

4. Un système SCR dans lequel un agent réducteur est fourni à un flux de gaz d'échappement provenant d'un moteur (231) pour purifier ledit gaz d'échappement par rapport à un contenu de NOx entre autres et dans lequel le système SCR comprend un module de vaporisation (261) disposé en amont d'un agencement de catalyseur (260 ; 262), dans lequel le module de vaporisation (261) est agencé pour vaporiser ledit agent réducteur de façon à obtenir un mélange de gaz d'échappement et d'agent réducteur, le système SCR comprenant :
- des moyens (240 ; 200 ; 210 ; 500) agencés pour surveiller en continu les changements d'une température dominante (Tmod) du module de vaporisation ;
**caractérisé par**
- des moyens (240 ; 200 ; 210 ; 500) agencés pour commander le mode de fonctionnement dudit moteur (231) sur la base desdits changements de la température dominante (Tmod) du module de vaporisation ;
- des moyens (200 ; 210 ; 500) arrangés pour passer d'un mode de fonctionnement d'un premier mode de fonctionnement (M3) correspondant à une faible consommation de carburant souhaitée et une teneur élevée en NOx à un deuxième mode de fonctionnement (M1 ; M2) correspondant à une consommation de carburant supérieure et une teneur inférieure en NOx du gaz d'échappement lorsque ladite température dominante (Tmod) dudit module de vaporisation (261) est inférieure à une première valeur de température prédéterminée (T1) ; et
- des moyens (200 ; 210 ; 500) agencés pour passer (s430) d'un mode de fonctionnement d'un deuxième mode de fonctionnement (M1 ; M2) correspondant à une consommation de carburant élevée et une teneur faible en NOx dudit gaz d'échappement à un premier mode de fonctionnement (M1) correspondant à une consommation de carburant faible et une teneur élevée en NOx lorsque ladite température dominante (Tmod) dudit module de vaporisation (261) atteint une deuxième valeur de température prédéterminée (T2).

5. Système SCR selon la revendication 4, comprenant en outre :
- des moyens (200 ; 210 ; 500) agencés pour modéliser en continu ladite température dominante (Tmod) dudit module de vaporisation sur la base d'au moins un des paramètres : température des gaz d'échappement (Tmeas), débit massique des gaz d'échappement, quantité dosée d'agent réducteur et température dudit agent réducteur.

6. Système SCR selon l'une quelconque des revendications 4-5 comprenant :
- les moyens (250 ; 200 ; 210 ; 500) agencés pour réduire le dosage de l'agent réducteur lorsque ladite température dominante (Tmod) dudit module de vaporisation est inférieure à un niveau de seuil prédéterminé (T1).

7. Véhicule à moteur (100 ; 110) comprenant un système SCR selon l'une quelconques des revendications 4 à 6.

8. Véhicule à moteur (100 ; 110) selon la revendication 7, dans lequel ledit véhicule à moteur est l'un quelconque parmi un camion, un bus ou une voiture.

9. Programme informatique (P) concernant un système SCR dans lequel un agent réducteur est fourni à un flux de gaz d'échappement provenant d'un moteur (230) pour purifier ledit gaz d'échappement par rapport à un contenu de NOx entre autres et dans lequel ledit système SCR comprend un module de vaporisation (261) disposé en amont d'un agencement de catalyseur (260), dans lequel le module de vaporisation (261) est agencé pour vaporiser ledit agent réducteur de manière à obtenir un mélange de gaz d'échappement et d'agent réducteur, dans lequel ledit programme informatique (P) comprend un code de programme pour provoquer une unité de commande électronique (200 ; 500) ou un autre ordinateur (210 ; 500) connecté à l'unité de commande électronique (200 ; 500) pour effectuer des étapes selon l'une quelconque des revendications 1 à 3.

10. Produit de programme informatique comprenant un code de programme stocké sur un support lisible par ordinateur pour l'exécution d'étapes du procédé selon l'une quelconque des revendications 1-3 lorsque ledit programme informatique est exécuté sur une unité de commande électronique (200 ; 500) ou sur un autre ordinateur (210 ; 500) connecté à l'unité de commande électronique (200 ; 500).
